# EUROPÄISCHE PATENTSCHRIFT

(11) **EP 2 455 607 B1**
(45) Veröffentlichungstag und Bekanntmachung des Hinweises auf die Patenterteilung: **15.11.2017**
(21) Anmeldenummer: 11181577.5
(22) Anmeldetag: 16.09.2011
(51) Int. Cl.: F02N 99/00, F02N 19/00, F02N 7/08

(54) **Vorrichtung und Verfahren zum Starten einer Brennkraftmaschine**
Method and device for starting a combustion engine
Dispositif et procédé pour démarrer un moteur à combustion interne

(30) Priorität: 18.11.2010 DE 102010044086
(43) Veröffentlichungstag der Anmeldung: 23.05.2012
(73) Patentinhaber: Robert Bosch GmbH, 70442 Stuttgart (DE)
(72) Erfinder: Sieber, Udo, 74321 Bietigheim (DE)

(56) Entgegenhaltungen:
- EP-A2- 1 486 667
- DE-A1-102007 001 119
- DE-U1- 20 306 851
- US-A- 2 171 257
- US-A1- 2010 276 221

## Beschreibung

### Stand der Technik

Die vorliegende Erfindung betrifft eine Vorrichtung und ein Verfahren zum Starten einer Brennkraftmaschine, insbesondere für einen Wiederstart in einem Start-Stopp-System sowie eine Fluidanordnung zum Starten einer Brennkraftmaschine.

Zur Kraftstoffeinsparung, insbesondere im Stadtverkehr, werden in jüngster Zeit verstärkt sogenannte Start-Stopp-Systeme eingesetzt, welche eine Brennkraftmaschine bei einem Stillstand des Fahrzeugs, beispielsweise vor einer Ampel, abstellen. Nach einem derartigen Abstellen muss dann wieder ein Neustart der Brennkraftmaschine erfolgen. Dies kann über den im Fahrzeug vorhandenen elektrischen Anlasser geschehen, wobei dies insofern nachteilig ist, als dass für den Neustart ein Startergeräusch erzeugt wird. Dies wird von vielen Fahrern jedoch als Komforteinbuße empfunden. Weiterhin ist aus der DE 203 06 851 U1 eine Schnellstarteinrichtung bekannt, bei der eine Brennkraftmaschine mittels eines fluidischen Antriebselements gestartet wird. Das fluidische Antriebselement wird dabei aus einem Fluidspeicher beaufschlagt und treibt die Brennkraftmaschine in einer vorwärts gerichteten Antriebsrichtung an. Hierbei ist jedoch nachteilig, dass im Fluidspeicher eine relativ große Energiemenge gespeichert werden muss, um die Antriebsleistung bereitzustellen, was zu einem relativ großen Bauraum führt.

### Offenbarung der Erfindung

Die erfindungsgemäße Vorrichtung zum Starten einer Brennkraftmaschine mit den Merkmalen des Anspruchs 1 weist demgegenüber den Vorteil auf, dass ein schnelles und sicheres Starten der Brennkraftmaschine möglich ist. Dabei kann ein unerwünschtes Startergeräusch entfallen und es ergibt sich keine zusätzliche Belastung eines Bordnetzes eines Fahrzeugs. Hierbei kann die erfindungsgemäße Vorrichtung ferner sehr kompakt aufgebaut sein, so dass erfindungsgemäß nur ein minimaler zusätzlicher Raumbedarf notwendig ist. Dies wird erfindungsgemäß dadurch erreicht, dass die Vorrichtung zum Starten der Brennkraftmaschine einen Fluidspeicher und eine Pumpe umfasst, welche mechanisch mit einem Kolben der Brennkraftmaschine verbunden ist. Die Pumpe weist einen Sauganschluss und einen Druckanschluss auf und der Druckanschluss ist über eine Fluidleitung mit dem Fluidspeicher in Fluidverbindung. Ferner umfasst die Vorrichtung ein Ventil, welches in der Fluidleitung zwischen Fluidspeicher und dem Druckanschluss der Pumpe angeordnet ist. Das Ventil übernimmt dabei die Herstellung und Unterbrechung einer Verbindung zwischen dem Fluidspeicher und der Pumpe. Hierbei ist eine vorwärtsgerichtete Antriebsrichtung der Pumpe im normalen Betrieb umgekehrt zu einer rückwärtsgerichteten Antriebsrichtung der Pumpe zur Vorbereitung des Neustarts der Brennkraftmaschine. Erfindungsgemäß kann somit durch die Umkehrung der Drehrichtung der Pumpe in die rückwärtsgerichtete Antriebsrichtung die Pumpe selbst zur rückwärtsgerichteten Bewegung wenigstens eines Kolbens der Brennkraftmaschine verwendet werden. Dabei treibt die Pumpe die Brennkraftmaschine nicht an, sondern stellt lediglich sicher, dass eine gewisse Verdichtung von Luft in einem Zylinder der Brennkraftmaschine vorhanden ist. Dadurch kann auch der zum Antrieb der Pumpe verwendete Fluidspeicher nur eine sehr kleine Speicherkapazität aufweisen und nimmt somit nur einen geringen Raum ein. Erfindungsgemäß kann somit durch Umkehrung einer Drehrichtung der Pumpe die Brennkraftmaschine in einen Zustand gebracht werden, aus welchem ein direkter Start, z.B. durch Einspritzen von Kraftstoff und Zünden des verdichteten Kraftstoff-Luftgemischs, möglich ist. Somit kann der im Zylinder entstehende Verbrennungsdruck die Brennkraftmaschine wirkungsvoll in Vorwärtsrichtung antreiben und die Brennkraftmaschine kann aus eigener Kraft starten. Hierbei fällt kein Startergeräusch an.

Die Unteransprüche zeigen bevorzugte Weiterbildungen der Erfindung.

Vorzugsweise ist die Pumpe eine Schmiermittelpumpe für eine Schmiermittelversorgung der Brennkraftmaschine. Hierdurch kann eine schon in der Brennkraftmaschine vorhandene Pumpe für die erfindungsgemäße Vorrichtung verwendet werden, wodurch Bauteileanzahl und Bauraum reduziert werden.

Weiter bevorzugt umfasst die Vorrichtung eine Steuereinheit, wobei die Steuereinheit ausgelegt ist, eine Leerlaufphase und/oder eine Schubphase und/oder eine Motorauslaufphase beim Bremsvorgang zu erfassen. Die Steuereinheit ist ferner mit dem Ventil verbunden und kann basierend auf dem erfassten Sensorsignal der Sensoreinrichtung ein Befüllen des Fluidspeichers ermöglichen.

Weiter bevorzugt umfasst die Vorrichtung ein Druckregelventil, welches in einer Abzweigungsleitung von der Fluidleitung zu einem Fluidreservoir angeordnet ist und welches eine maximale Druckhöhe des Fluidspeichers begrenzt. Mit anderen Worten öffnet das Druckregelventil, sobald ein vorbestimmter Druck im Fluidspeicher vorhanden ist. Hierdurch kann eine Überbefüllung des Fluidspeichers verhindert werden. Besonders bevorzugt zweigt die Abzweigungsleitung dabei von einem Abschnitt der Fluidleitung ab, welcher zwischen dem Ventil und dem Druckanschluss der Pumpe liegt. Dies ermöglicht einen besonders kompakten Aufbau.

Weiter bevorzugt ist in der Fluidleitung zwischen dem Ventil und der Pumpe ein Filter angeordnet.

Gemäß einer weiteren bevorzugten Ausgestaltung der Erfindung ist die Pumpe mit einer Kurbelwelle der Brennkraftmaschine verbunden. Dies ermöglicht einen besonders kompakten Aufbau.

Die erfindungsgemäße Pumpe ist weiter bevorzugt als Rotationsverdrängerpumpe ausgebildet und ist insbesondere eine Zahnradpumpe oder eine Trochoidenpumpe.

Vorzugsweise umfasst die Vorrichtung ferner einen Sensor, welcher mit der Steuereinheit verbunden ist und welcher eine Position des Kolbens der Brennkraftmaschine erfasst. Somit kann durch den Sensor bestimmt werden, wenn der Kolben in der gewünschten Startposition nahe dem oberen Totpunkt des Kolbens positioniert ist und die Steuereinheit kann dann die Verbindung zwischen dem Fluidspeicher und der Pumpe wieder unterbrechen. Die bevorzugte Startposition des Kolbens liegt nahe dem oberen Totpunkt, in vorwärtsgerichteter Drehrichtung des Kolbens kurz nach dem oberen Totpunkt in einem Kreiswinkelbereich zwischen 5° und 15°, vorzugsweise bei 10°.

Weiterhin betrifft die vorliegende Erfindung eine Brennkraftmaschine, umfassend einen Schmierstoffkreislauf mit einer Schmiermittelpumpe, welche Schmierstoff von einer Schmierstoff-Sammelstelle ansaugt und über eine Zuleitung zu einer Schmierstelle fördert und von der Schmierstelle eine Rückleitung der Schmierstoffe zurück zur Schmierstoff-Sammelstelle gefördert wird. Die Schmierstoffpumpe ist dabei mit einer Kurbelwelle der Brennkraftmaschine verbunden. An der Kurbelwelle ist wenigstens ein in einem Zylinder laufender Kolben angeordnet, wobei im vorwärtsgerichteten Normalbetrieb die Kurbelwelle die Schmierstoffpumpe in einer vorwärts gerichteten Antriebsrichtung antreibt. Ferner ist eine Vorrichtung zum Starten der Brennkraftmaschine vorgesehen, welche einen Fluidspeicher und ein in der Zuleitung des Schmierstoffs zur Schmierstelle angeordnetes Ventil umfasst. Das Ventil kann dabei eine Fluidverbindung von einem Druckanschluss der Schmierstoffpumpe zum Fluidspeicher herstellen und unterbrechen. Wenn in dem Fluidspeicher ein höherer Druck als in der Zuleitung herrscht, kann bei einer Ventilstellung, die den Fluidspeicher mit dem Druckanschluss der Pumpe verbindet, Fluid aus dem Fluidspeicher zur Pumpe strömen und diese in rückwärts gerichteter Antriebsrichtung antreiben. Hierdurch wird die Kurbelwelle in Rückwärtsrichtung bewegt. Dadurch kann Luft in einem Zylinder durch Rückwärtsdrehen des Kolbens komprimiert werden. Vorzugsweise ist ein Sensor vorgesehen, welcher direkt oder indirekt eine Position des Kolbens bestimmen kann. Vorzugsweise wird das Rückwärtsdrehen der Kurbelwelle dann beendet, wenn der Kolben in rückwärtsgerichteter Drehrichtung kurz vor dem oberen Totpunkt steht und die im Zylinder vorhandene Luft komprimiert hat. Dann kann für ein Starten der Brennkraftmaschine einfach Kraftstoff in den Zylinder eingespritzt werden und dieser entzündet werden. Somit kann die Brennkraftmaschine aus eigener Kraft starten, da der Verbrennungsdruck den Kolben in der Vorwärtsrichtung antreibt.

Erfindungsgemäß ergibt sich hierbei weder ein Startergeräusch noch eine Bordnetzbelastung.

Weiterhin betrifft die Erfindung eine Fluidanordnung für ein Starten einer Brennkraftmaschine mit einem Fluidspeicher, einer über eine Fluidleitung mit dem Fluidspeicher verbundenen Pumpe und einem Ventil. Das Ventil ist in der Fluidleitung zwischen dem Fluidspeicher und der dem Druckanschluss der Pumpe angeordnet. Weiterhin ist eine Steuereinheit zum Steuern des Ventils vorgesehen, welche ausgelegt ist, vor dem Starten der Brennkraftmaschine eine Verbindung zwischen dem Fluidspeicher und dem Druckanschluss der Pumpe herzustellen, so dass Fluid aus dem Fluidspeicher zur Pumpe strömt und die Pumpe in einer rückwärts gerichteten Drehrichtung dreht, um einen Kolben der Brennkraftmaschine ebenfalls in rückwärts gerichteter Drehrichtung in eine gewünschte Startposition nahe dem oberen Totpunkt zu drehen.

Eine Startposition des Kolbens liegt dabei vorzugsweise in einer rückwärts gerichteten Drehrichtung der Kurbelwelle kurz vor dem oberen Totpunkt, vorzugsweise in einem Kreiswinkelbereich von 5° bis 15°, vorzugsweise 10°.

Weiterhin betrifft die vorliegende Erfindung ein Verfahren zum Starten einer Brennkraftmaschine, welcher eine Kurbelwelle und wenigstens einen in einem Zylinder angeordneten Kolben umfasst. Das erfindungsgemäße Verfahren umfasst dabei die Schritte des Drehens der Kurbelwelle in einer rückwärtsgerichteten Antriebsrichtung mittels Druck aus einem Fluidspeicher derart, dass Luft in dem Zylinder durch den Kolben komprimiert wird, des Einspritzens von Kraftstoff in den diese komprimierte Luft aufweisenden Zylinder und des Zündens des Kraftstoff-Luftgemisches dieses Zylinders, um die Brennkraftmaschine wieder in Vorwärtsrichtung zu starten. Vorzugsweise wird dabei zum Antreiben der Kurbelwelle eine mit der Kurbelwelle verbundene Pumpe, vorzugsweise eine Rotationsverdrängerpumpe, verwendet. Weiter bevorzugt wird das Rückwärtsdrehen der Kurbelwelle so lange ausgeführt, bis der Kolben in Rückwärtsrichtung kurz vor dem oberen Totpunkt steht, ohne den oberen Totpunkt zu überfahren. In dieser Position ist eine ausreichende Komprimierung der Luft vorgenommen worden und insbesondere kann dann direkt durch Zünden eines Kraftstoff-Luftgemisches eine vorwärts gerichtete Drehbewegung der Kurbelwelle erreicht werden. Mit anderen Worten wird die Kurbelwelle solange rückwärts gedreht, bis der Kolben eine Position erreicht, welche in der normalen Vorwärtsdrehrichtung der Kurbelwelle kurz nach dem oberen Totpunkt liegt, vorzugsweise an einer Kreiswinkelposition zwischen 5° bis 15°, besonders bevorzugt bei ca. 10°. Besonders bevorzugt wird die Kurbelwelle in rückwärtsgerichteter Richtung solange gedreht, bis der Kolben wenigstens ein Mal den oberen Totpunkt überfahren hat und dann wieder eine Position in Rückwärtsdrehrichtung kurz vor dem oberen Totpunkt einnimmt. Hierdurch kann sichergestellt werden, dass in Fällen, in denen beispielsweise der Kolben am oberen Totpunkt oder in Vorwärtsdrehrichtung kurz nach dem oberen Totpunkt stand, eine ausreichende Kompression von Luft im Zylinder erreicht wird. Somit wird erfindungsgemäß der Kolben in rückwärts gerichteter Antriebsrichtung höchstens ein Mal über den oberen Totpunkt gedreht, wobei in den meisten Fällen je nach Anfangsposition des Kolbens nur ½- bzw. eine ¾-Umdrehung des Kolbens in rückwärts gerichteter Richtung notwendig ist. Hierdurch muss ein Druck im Fluidspeicher nicht sehr hoch sein und der Fluidspeicher muss kein allzu großes Volumen aufweisen.

### Zeichnung

Nachfolgend wird unter Bezugnahme auf die begleitende Zeichnung ein bevorzugtes Ausführungsbeispiel der Erfindung im Detail beschrieben. In der Zeichnung ist:
- Figur 1: eine schematische Darstellung einer Vorrichtung zum Starten einer Brennkraftmaschine im normalen Betrieb, und
- Figur 2: eine schematische Darstellung einer Vorrichtung zum Starten einer Brennkraftmaschine im rückwärtsgerichteten Betrieb zum Starten der Brennkraftmaschine.

### Bevorzugte Ausführungsform der Erfindung

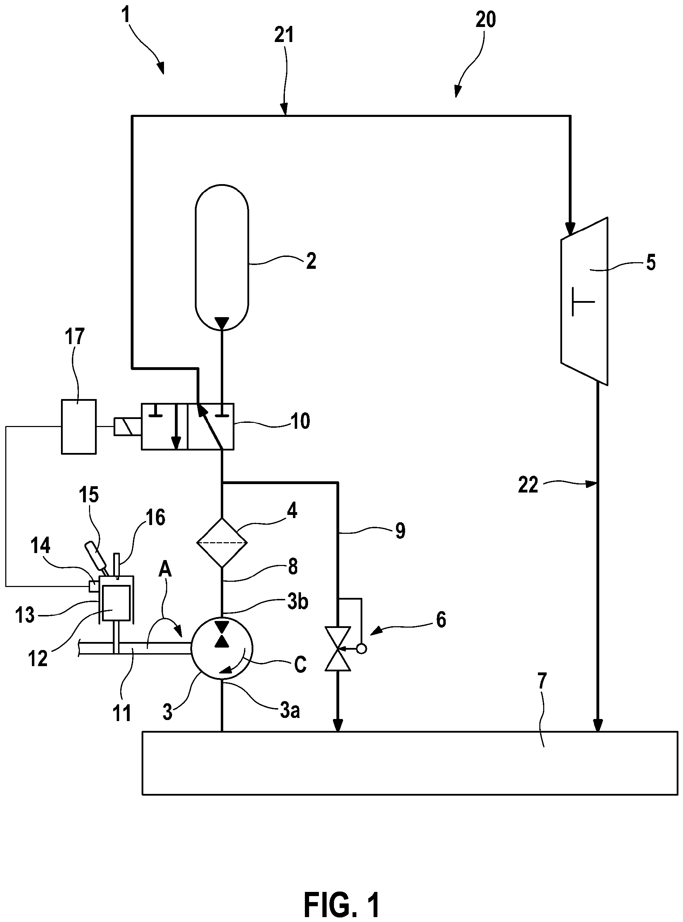

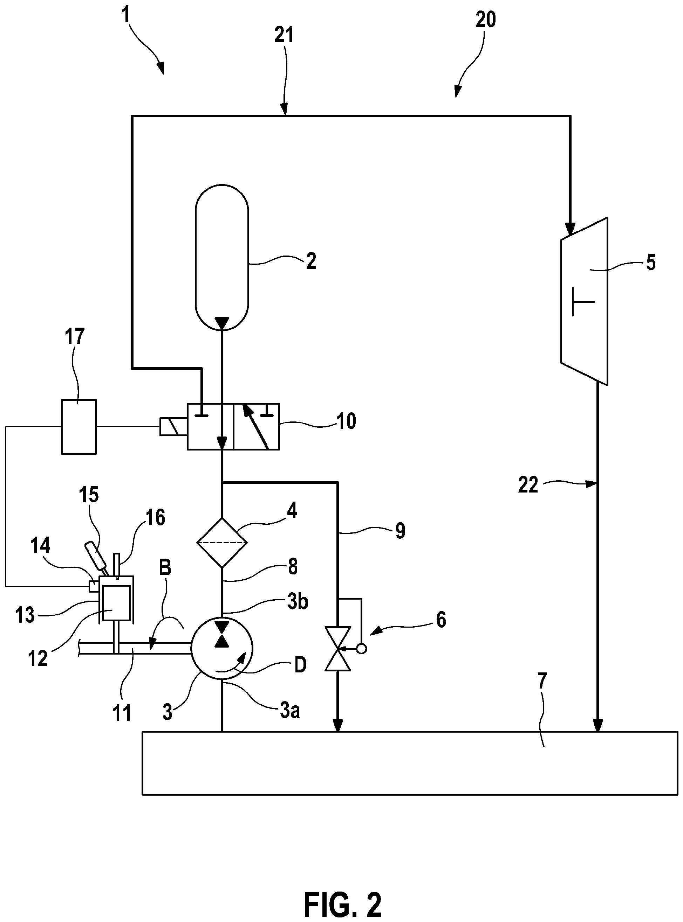

Nachfolgend wird unter Bezugnahme auf die Figuren 1 und 2 eine Vorrichtung 1 zum Starten einer Brennkraftmaschine im Detail beschrieben.

Wie aus den Figuren 1 und 2 ersichtlich ist, umfasst die Brennkraftmaschine einen Schmierstoffkreislauf 20 mit einer Zuleitung 21, über welche Schmierstoff von einem Reservoir 7 zu einer Schmierstelle 5 zugeführt wird und einer Rückleitung 22, welche den Schmierstoff von der Schmierstelle 5 zurück zum Reservoir 7 führt. Eine Förderung des Schmierstoffs erfolgt mittels einer Pumpe 3, wie beispielsweise einer Zahnradpumpe, welche einen Sauganschluss 3a und einen Druckanschluss 3b aufweist. Die Pumpe 3 ist mechanisch mit einer Kurbelwelle 11 verbunden, so dass bei Drehen der Kurbelwelle 11 auch die Pumpe 3 betrieben wird. Im normalen Betrieb (Figur 1) wird hierbei Schmierstoff vom Reservoir 7 angesaugt und durch die Zuleitung 21 zur Schmierstelle 5 gefördert. Zur Vermeidung von Verschmutzungen an der Schmierstelle 5 ist in normaler Förderrichtung nach der Pumpe 3 ein Filter 4 angeordnet.

Wie weiter aus Figur 1 ersichtlich ist, ist an der Kurbelwelle 11 in bekannter Weise ein Kolben 12 in einem Zylinder 13 angeordnet. Am Zylinder 13 ist ferner ein Injektor 15 zum Einspritzen von Kraftstoff sowie eine Zündeinrichtung 16, beispielsweise eine Zündkerze, angeordnet.

Die erfindungsgemäße Vorrichtung 1 zum Starten der Brennkraftmaschine umfasst einen Fluidspeicher 2, welcher über ein Ventil 10 in den Schmierstoffkreislauf 20 eingebunden ist. Das Ventil 10 ist dabei als 3/2-Wegeventil ausgebildet und verbindet in einer ersten Stellung den Druckanschluss 3b der Pumpe 3 mit der Schmierstelle 5 und in einer zweiten Stellung den Druckanschluss 3b der Pumpe 3 mit dem Fluidspeicher 2. Hierzu ist das Ventil 10 mit einer Steuereinheit 17 verbunden. Die Steuereinheit 17 ist ferner mit einem Sensor 14, welcher am Zylinder 13 angeordnet ist, um eine Position des Kolbens 12 im Zylinder zu bestimmen, verbunden.

Ein Leitungsabschnitt der Zuleitung 21 zwischen dem Druckanschluss der Pumpe 3 und dem Ventil 10 ist mit dem Bezugszeichen 8 bezeichnet und wird nachfolgend als Fluidleitung 8 bezeichnet. Von der Fluidleitung 8 geht eine Abzweigleitung 9 zurück zum Reservoir 7, wobei in der Abzweigleitung 9 ein Rückschlagventil 6 angeordnet ist. Das Rückschlagventil 6 öffnet dabei bei einem zu hohen Druck in der Fluidleitung 8, so dass der Schmierstoff zurück ins Reservoir 7 strömen kann.

Die Funktion der erfindungsgemäßen Vorrichtung zum Starten der Brennkraftmaschine ist dabei wie folgt. Bei dem in Figur 1 gezeigten Normalbetrieb ist die Brennkraftmaschine in Betrieb und treibt die Kurbelwelle 11 in Vorwärtsrichtung A an. Hierdurch wird die Pumpe 3 in vorwärtsgerichteter Richtung C angetrieben und saugt aus dem Reservoir 7 Schmierstoff an und fördert diesen durch das Ventil 10 zur Schmierstelle 5. Von der Schmierstelle 5 strömt der Schmierstoff über die Rückleitung 22 wieder zurück in das Reservoir 7. Wenn sich die Brennkraftmaschine beispielsweise in einer Schubphase oder einer Leerlaufphase oder beim Bremsen in einer Motorauslaufphase befindet, wird das Ventil 10 in die in Figur 2 gezeigte Stellung umgeschaltet, so dass die Pumpe den Fluidspeicher 2 füllen kann. Sobald ein vorbestimmter Fülldruck erreicht ist, wird der Schmierstoff über die Abzweigleitung 9 in das Rückschlagventil 6 zurück in das Reservoir 7 geführt. Wenn der Fluidspeicher voll ist, kann das Ventil 10 auch wieder in die in Figur 1 gezeigte Ausgangsstellung zurückgestellt werden. Hierbei wird ein bestimmter Druck im Fluidspeicher 2 gehalten.

Wenn nun z.B. ein Start-Stopp-System die Brennkraftmaschine ausgeschaltet hat, beispielsweise vor einer roten Ampel, wird das Ventil 10 in die in Figur 2 gezeigte Stellung geschaltet, so dass der Fluidspeicher 2 mit der Pumpe 8 verbunden ist. Das im Fluidspeicher 2 befindliche Fluid strömt somit entgegen der normalen Förderrichtung der Pumpe über die Fluidleitung 8 zum Druckanschluss 3b der Pumpe und treibt die Pumpe 3 in rückwärts gerichteter Richtung D an. Da die Pumpe 3 mechanisch mit der Kurbelwelle 11 verbunden ist, wird die Kurbelwelle ebenfalls in rückwärts gerichteter Richtung B (siehe Figur 2) angetrieben. Hierdurch wird auch der Kolben 14 in rückwärts gerichteter Richtung bewegt. Hierbei ist am Zylinder 13 der Sensor 14 angeordnet, um eine Position des Kolbens 12 zu bestimmen. Der sich in Rückwärtsrichtung drehende Kolben komprimiert dabei die im Zylinder befindliche Luft, und die Verbindung zwischen dem Fluidspeicher 2 und der Pumpe 3 über das Ventil 10 wird unterbrochen, sobald der Kolben 2 sich von der rückwärtigen Seite einem oberen Totpunkt nähert. In diesem Zustand wurde die im Zylinder befindliche Luft weitestgehend komprimiert. Diese Position des Kolbens entspricht im normalen, vorwärtsgerichteten Betrieb der Brennkraftmaschine einer Position kurz nach dem oberen Totpunkt, vorzugsweise bei einem Kreiswinkel von ca. 10°. Wenn nun wieder ein Starten der Brennkraftmaschine erfolgen soll, wird Kraftstoff über den Injektor 15 in die komprimierte Luft eingespritzt und gezündet. Als Folge bewegt sich der Kolben wieder in der normalen Vorwärtsrichtung nach unten und treibt die Kurbelwelle 11 wieder in Vorwärtsrichtung A an. Somit startet die Brennkraftmaschine wieder direkt aus eigener Kraft. Dadurch wird auch die Pumpe 3 wieder in Vorwärtsrichtung angetrieben, so dass Schmierstoff über den Schmierstoffkreislauf 20 wieder den Schmierstellen 5 zugeführt wird, wobei die Steuereinheit 17 das Ventil 10 wieder in die normale, in Figur 1 gezeigte Position zurückgestellt hat.

Es sei angemerkt, dass die in Figur 2 gezeigte Stellung des Ventils 10 auch alternativ solange beibehalten werden kann, bis der Kolben 12 wenigstens ein Mal in rückwärts gerichteter Richtung über den oberen Totpunkt gefahren ist und sich aus rückwärts gerichteter Richtung wieder dem oberen Totpunkt annähert. Diese verlängerte Rückdrehphase bietet sich an, wenn der Kolben 12 nach einem Abstellen der Brennkraftmaschine zufällig an einer Position nahe dem oberen Totpunkt oder am oberen Totpunkt stehen bleibt.

Wie oben beschreiben, kann der Fluidspeicher 2 vorzugsweise in der Leerlaufphase bzw. Schubphase der Brennkraftmaschine gefüllt werden. Es ist jedoch auch möglich, dass periodisch ein Füllen des Fluidspeichers 2 vorgenommen wird oder am Fluidspeicher 2 Sensoren zur Bestimmung eines Füllzustandes vorgesehen sind, um eine Füllung des Fluidspeichers 2 zu initiieren. Es sei angemerkt, dass es grundsätzlich auch möglich ist, dass der Fluidspeicher 2 mittels einer separaten Pumpe befüllt wird, was jedoch nachteilig ist, da hierfür eine zusätzliche Pumpe notwendig ist.

Erfindungsgemäß kann somit ein Direktstart der Brennkraftmaschine durch Verwendung einer kostengünstig bereitstellbaren Hilfsenergie aus dem Fluidspeicher 2 erfolgen. Die Erfindung kann besonders bevorzugt in Start-Stopp-Systemen von Fahrzeugen eingesetzt werden. Dabei ist es möglich, dass der Kolben 12 entweder unmittelbar nach Abschalten der Brennkraftmaschine in die Startposition gebracht wird oder unmittelbar vor dem Startvorgang in die Startposition gebracht wird. Erfindungsgemäß fallen hierbei weder unerwünschte Startergeräusche beim Starten der Brennkraftmaschine an, noch folgt eine unerwünschte Belastung des Bordnetzes des Fahrzeugs, da zum Starten die im Fluidspeicher 2 gespeicherte Hilfsenergie verwendet wird. Die erfindungsgemäße Vorrichtung benutzt dabei eine Vielzahl von Komponenten, welche sowieso im Fahrzeug vorhanden sind, insbesondere die Schmierstoffpumpe. Dadurch kann die vorliegende Erfindung sehr kostengünstig in bestehende Systeme von Fahrzeugen integriert werden. Da erfindungsgemäß nicht mehr als zwei vollständige Umdrehungen der Kurbelwelle 11 notwendig sind, kann auch ein Volumen des Fluidspeichers 2 klein gewählt werden, da die hierfür notwendige Hilfsenergie aus dem Fluidspeicher relativ klein ist.

## Patentansprüche

1. Vorrichtung zum Starten einer Brennkraftmaschine, umfassend:
- einen Fluidspeicher (2),
- eine Pumpe (3) mit einem Sauganschluss (3a) und einem Druckanschluss (3b), wobei die Pumpe mit der Brennkraftmaschine mechanisch verbunden ist und der Druckanschluss (3b) über eine Fluidleitung (8) mit dem Fluidspeicher (2) in Fluidverbindung steht,
- ein Ventil (10), welches in der Fluidleitung (8) zwischen dem Fluidspeicher (2) und dem Druckanschluss (3b) der Pumpe (3) angeordnet ist und die Fluidverbindung zwischen dem Fluidspeicher (2) und der Pumpe (3) herstellt und unterbricht, und
- eine Steuereinheit (17), welche mit dem Ventil (10) verbunden ist, um das Ventil zu stellen,
- wobei die Steuereinheit (17) ausgelegt ist, vor einem Starten der Brennkraftmaschine die Fluidverbindung zwischen dem Fluidspeicher (2) und dem Druckanschluss (3b) der Pumpe (3) herzustellen, so dass die Pumpe (3) in einer rückwärts gerichteten Antriebsrichtung (D) gedreht wird, um Kolben (12) der Brennkraftmaschine in einer rückwärts gerichteten Richtung (B) zu drehen.

2. Vorrichtung nach Anspruch 1, **dadurch gekennzeichnet, dass** die Pumpe (3) eine Schmierstoffpumpe zur Schmiermittelversorgung von Schmierstellen (5) ist.

3. Vorrichtung nach einem der vorhergehenden Ansprüche, **dadurch gekennzeichnet, dass** die Steuereinheit (17) ausgelegt ist, eine Leerlaufphase der Brennkraftmaschine und/oder eine Schubphase der Brennkraftmaschine und/oder eine Motorauslaufphase zu erfassen und dann das Ventil (10) derart zu stellen, dass eine Fluidverbindung zwischen der Pumpe (3) und dem Fluidspeicher (2) über das Ventil (10) bereitgestellt wird, um den Fluidspeicher (2) zu laden.

4. Vorrichtung nach einem der vorhergehenden Ansprüche, ferner umfassend ein Druckregelventil (6), welches in einer Abzweigungsleitung (9) angeordnet ist, wobei die Abzweigungsleitung (9) von der Fluidleitung (8) zwischen der Pumpe (3) und dem Ventil (10) abzweigt und zu einem Reservoir (7) des Fluids führt.

5. Vorrichtung nach Anspruch 4, **dadurch gekennzeichnet, dass** die Abzweigungsleitung (9) von einem Abschnitt der Fluidleitung (8) abzweigt, welcher zwischen dem Ventil (10) und der Pumpe (3) liegt.

6. Vorrichtung nach einem der vorhergehenden Ansprüche, **dadurch gekennzeichnet, dass** die Pumpe (3) mit einer Kurbelwelle der Brennkraftmaschine verbunden ist.

7. Vorrichtung nach einem der vorhergehenden Ansprüche, ferner umfassend einen Sensor (14), welcher mit der Steuereinheit (17) verbunden ist und welcher eine Position des Kolbens (12) der Brennkraftmaschine erfasst.

8. Brennkraftmaschine, umfassend:
- einen Schmierstoffkreislauf (20) mit einer einen Sauganschluss (3a) und einen Druckanschluss (3b) aufweisenden Schmierstoffpumpe (3), welche Schmierstoff aus einem Reservoir (7) ansaugt,
- einer Zuleitung (21) zu einer Schmierstelle (5) und einer Rückleitung (22) von der Schmierstelle (5) zum Reservoir (7),
- wobei die Schmierstoffpumpe (3) mit einer Kurbelwelle (11), an der wenigstens ein Kolben (12) angeordnet ist, verbunden ist,
- wobei die Kurbelwelle im Betrieb der Brennkraftmaschine die Schmierstoffpumpe (3) in einer vorwärtsgerichteten Antriebsrichtung (C) antreibt, und
- eine Startvorrichtung zum Starten der Brennkraftmaschine,
- wobei die Startvorrichtung einen Fluidspeicher (2), welcher an der Zuleitung (21) angeordnet ist, und ein Ventil (10) umfasst, welches in der Zuleitung (21) zwischen dem Fluidspeicher (2) und dem Druckanschluss (3b) angeordnet ist und ausgelegt ist, eine Fluidverbindung zwischen der Schmierstoffpumpe (3) und Fluidspeicher (2) herzustellen und zu unterbrechen,
- wobei die Schmierstoffpumpe (3) die Kurbelwelle (11) in einer Rückwärtsrichtung (B) dreht, wenn das Ventil (10) eine Fluidverbindung zwischen dem Fluidspeicher (2), in welchem Fluid unter Druck gespeichert ist, und dem Druckanschluss (3b) der Schmierstoffpumpe (3) bereitstellt und die Schmierstoffpumpe (3) in einer rückwärts gerichteten Antriebsrichtung (D) dreht.

9. Fluidanordnung für ein Starten einer Brennkraftmaschine, umfassend:
- einen Fluidspeicher (2),
- eine Pumpe (3), mit einem Sauganschluss (3a) und einem Druckanschluss (3b), wobei der Druckanschluss über eine Fluidleitung (8) mit dem Fluidspeicher (2) verbunden ist,
- ein Ventil (10), welches in der Fluidleitung (8) zwischen dem Fluidspeicher (2) und dem Druckanschluss der Pumpe (3) angeordnet ist, und
- eine Steuereinheit (17), welche ausgelegt ist, das Ventil (10) zu schalten,
- wobei die Steuereinheit (17) ausgelegt ist, zum Starten der Brennkraftmaschine das Ventil (10) in eine Stellung zu bringen, in der der Fluidspeicher (2) mit dem Druckanschluss (3b) der Pumpe (3) verbunden ist, so dass die Pumpe (3) in einer rückwärtsgerichteten Antriebsrichtung (D) durch das aus dem Fluidspeicher (2) strömende Fluid gedreht wird und über eine Kurbelwelle einen Kolben der Brennkraftmaschine in Rückwärtsrichtung in eine Startposition dreht.

10. Verfahren zum Starten einer Brennkraftmaschine mit einer Kurbelwelle (11), wenigstens einem in einem Zylinder angeordneten Kolben (12) und einem Schmierstoffkreislauf (20) mit einer Pumpe (3), welche mit der Kurbelwelle verbunden ist, umfassend die Schritte:
- Drehen der Pumpe (3) in einer rückwärts gerichteten Antriebsrichtung (D) mittels Druck aus einem Fluidspeicher (2) derart, dass der Kolben (12) Luft im Zylinder (13) komprimiert,
- Einspritzen von Kraftstoff in die im Zylinder (13) komprimierte Luft, und
- Zünden des Kraftstoff-Luft-Gemisches im Zylinder (13), um die Brennkraftmaschine selbsttätig zu starten.

11. Verfahren nach Anspruch 10, **dadurch gekennzeichnet, dass** die Kurbelwelle (11) in rückwärtsgerichteter Antriebsrichtung (B) solange gedreht wird, bis der Kolben (12) eine Position nahe dem oberen Totpunkt einnimmt, insbesondere eine Kreiswinkelposition zwischen 5° bis 15°, vorzugsweise 10° einnimmt.

12. Verfahren nach Anspruch 10 oder 11, **dadurch gekennzeichnet, dass** die Kurbelwelle (11) in rückwärts gerichteter Antriebsrichtung (B) solange gedreht wird, bis der Kolben (12) mindestens ein Mal den oberen Totpunkt überfahren hat.

## Claims

1. Device for starting an internal combustion engine, comprising:
- a fluid accumulator (2),
- a pump (3) having a suction port (3a) and a pressure port (3b), wherein the pump is mechanically connected to the internal combustion engine and the pressure port (3b) is fluidically connected via a fluid line (8) to the fluid accumulator (2),
- a valve (10) which is arranged in the fluid line (8) between the fluid accumulator (2) and the pressure port (3b) of the pump (3) and which produces and shuts off the fluidic connection between the fluid accumulator (2) and the pump (3), and
- a control unit (17) which is connected to the valve (10) for the purposes of adjusting the valve,
- wherein the control unit (17) is designed to produce the fluidic connection between the fluid accumulator (2) and the pressure port (3b) of the pump (3) before starting of the internal combustion engine, such that the pump (3) is rotated in a backwardly oriented drive direction (D) in order to rotate pistons (12) of the internal combustion engine in a backwardly oriented direction (B).

2. Device according to Claim 1, **characterized in that** the pump (3) is a lubricant pump for the supply of lubricant to lubrication points (5).

3. Device according to one of the preceding claims, **characterized in that** the control unit (17) is designed to detect an idle phase of the internal combustion engine and/or an overrun phase of the internal combustion engine and/or an engine rundown phase and to then adjust the valve (10) such that a fluidic connection between the pump (3) and the fluid accumulator (2) is provided via the valve (10) for the purposes of charging the fluid accumulator (2).

4. Device according to one of the preceding claims, furthermore comprising a pressure regulating valve (6) which is arranged in a branch line (9), wherein the branch line (9) branches off from the fluid line (8) between the pump (3) and the valve (10) and leads to a reservoir (7) of the fluid.

5. Device according to Claim 4, **characterized in that** the branch line (9) branches off from a section of the fluid line (8) which is situated between the valve (10) and the pump (3).

6. Device according to one of the preceding claims, **characterized in that** the pump (3) is connected to a crankshaft of the internal combustion engine.

7. Device according to one of the preceding claims, furthermore comprising a sensor (14) which is connected to the control unit (17) and which detects a position of the piston (12) of the internal combustion engine.

8. Internal combustion engine comprising:
- a lubricant circuit (20) having a lubricant pump (3) which has a suction port (3a) and a pressure port (3b) and which draws lubricant out of a reservoir (7),
- a feed line (21) to a lubrication point (5) and a return line (22) from the lubrication point (5) to the reservoir (7),
- wherein the lubricant pump (3) is connected to a crankshaft (11) on which at least one piston (12) is arranged,
- wherein, during the operation of the internal combustion engine, the crankshaft drives the lubricant pump (3) in a forwardly oriented drive direction (C), and
- a starting device for starting the internal combustion engine,
- wherein the starting device comprises a fluid accumulator (2), which is arranged on the feed line (21), and a valve (10), which is arranged in the feed line (21) between the fluid accumulator (2) and the pressure port (3b) and which is designed to produce and shut off a fluidic connection between the lubricant pump (3) and fluid accumulator (2),
- wherein the lubricant pump (3) rotates the crankshaft (11) in a backward direction (B) if the valve (10) provides a fluidic connection between the fluid accumulator (2), in which fluid is stored under pressure, and the pressure port (3b) of the lubricant pump (3) and the lubricant pump (3) rotates in a backwardly oriented drive direction (D).

9. Fluid arrangement for starting an internal combustion engine, comprising:
- a fluid accumulator (2),
- a pump (3) having a suction port (3a) and a pressure port (3b), wherein the pressure port is fluidically connected via a fluid line (8) to the fluid accumulator (2),
- a valve (10) which is arranged in the fluid line (8) between the fluid accumulator (2) and the pressure port of the pump (3), and
- a control unit (17) which is designed for switching the valve (10),
- wherein the control unit (17) is designed to, for starting the internal combustion engine, move the valve (10) into a position in which the fluid accumulator (2) is connected to the pressure port (3b) of the pump (3), such that the pump (3) is rotated in a backwardly oriented drive direction (D) by the fluid flowing out of the fluid accumulator (2) and, via a crankshaft, rotates a piston of the internal combustion engine in a backward direction into a starting position.

10. Method for starting an internal combustion engine having a crankshaft (11), having at least one piston (12) arranged in a cylinder, and having a lubricant circuit (20) with a pump (3) which is connected to the crankshaft, comprising the steps:
- rotating the pump (3) in a backwardly oriented drive direction (D) by means of pressure from a fluid accumulator (2) such that the piston (12) compresses air in the cylinder (13),
- injecting fuel into the air compressed in the cylinder (13), and
- igniting the fuel-air mixture in the cylinder (13) in order to automatically start the internal combustion engine.

11. Method according to Claim 10, **characterized in that** the crankshaft (11) is rotated in the backwardly oriented drive direction (B) until the piston (12) assumes a position close to the top dead centre, in particular assumes a central angle position of between 5° and 15°, preferably 10°.

12. Method according to Claim 10 or 11, **characterized in that** the crankshaft (11) is rotated in the backwardly oriented drive direction (B) until the piston (12) has passed through the top dead centre at least once.

## Revendications

1. Dispositif pour redémarrer un moteur à combustion interne, comprenant :
- un accumulateur de fluide (2),
- une pompe (3) avec un raccord d'aspiration (3a) et un raccord de pression (3b), la pompe étant connectée mécaniquement au moteur à combustion interne et le raccord de pression (3b) étant en liaison fluidique par le biais d'une conduite de fluide (8) avec l'accumulateur de fluide (2),
- une soupape (10) qui est disposée dans la conduite de fluide (8) entre l'accumulateur de fluide (2) et le raccord de pression (3b) de la pompe (3) et qui établit et interrompt la liaison fluidique entre l'accumulateur de fluide (2) et la pompe (3), et
- une unité de commande (17) qui est connectée à la soupape (10) afin de régler la soupape,
- l'unité de commande (17) étant conçue pour établir, avant un démarrage du moteur à combustion interne, la liaison fluidique entre l'accumulateur de fluide (2) et le raccord de pression (3b) de la pompe (3), de telle sorte que la pompe (3) soit tournée dans une direction d'entraînement (D) orientée vers l'arrière afin de faire tourner les pistons (12) du moteur à combustion interne dans une direction (B) orientée vers l'arrière.

2. Dispositif selon la revendication 1, **caractérisé en ce que** la pompe (3) est une pompe de lubrifiant pour l'alimentation en lubrifiant de zones à lubrifier (5).

3. Dispositif selon l'une quelconque des revendications précédentes, **caractérisé en ce que** l'unité de commande (17) est conçue pour détecter une phase de marche à vide du moteur à combustion interne et/ou une phase de poussée du moteur à combustion interne et/ou une phase de progression vers l'arrêt du moteur et pour régler ensuite la soupape (10) de telle sorte qu'une liaison fluidique soit établie entre la pompe (3) et l'accumulateur de fluide (2) par le biais de la soupape (10) afin de charger l'accumulateur de fluide (2).

4. Dispositif selon l'une quelconque des revendications précédentes, comprenant en outre une soupape de régulation de la pression (6) qui est disposée dans une conduite de dérivation (9), la conduite de dérivation (9) partant de la conduite fluidique (8) entre la pompe (3) et la soupape (10) et conduisant à un réservoir (7) de fluide.

5. Dispositif selon la revendication 4, **caractérisé en ce que** la conduite de dérivation (9) part d'une portion de la conduite fluidique (8) qui est située entre la soupape (10) et la pompe (3).

6. Dispositif selon l'une quelconque des revendications précédentes, **caractérisé en ce que** la pompe (3) est connectée à un vilebrequin du moteur à combustion interne.

7. Dispositif selon l'une quelconque des revendications précédentes, comprenant en outre un capteur (14) qui est connecté à l'unité de commande (17) et qui détecte une position du piston (12) du moteur à combustion interne.

8. Moteur à combustion interne, comprenant :
- un circuit de lubrifiant (20) avec une pompe à lubrifiant (3) présentant un raccord d'aspiration (3a) et un raccord de pression (3b), qui aspire du lubrifiant hors d'un réservoir (7),
- une conduite d'alimentation (21) allant vers une zone à lubrifier (5) et une conduite de retour (22) allant de la zone à lubrifier (5) jusqu'au réservoir (7),
- la pompe à lubrifiant (3) étant connectée à un vilebrequin (11) sur lequel est disposé au moins un piston (12),
- le vilebrequin, pendant le fonctionnement du moteur à combustion interne, entraînant la pompe à lubrifiant (3) dans une direction d'entraînement orientée vers l'avant (C), et
- un dispositif de démarrage pour le démarrage du moteur à combustion interne,
- le dispositif de démarrage comprenant un accumulateur de fluide (2) qui est disposé au niveau de la conduite d'alimentation (21) et une soupape (10) qui est disposée dans la conduite d'alimentation (21) entre l'accumulateur de fluide (2) et le raccord de pression (3b) et qui est conçue pour établir et interrompre une liaison fluidique entre la pompe à lubrifiant (3) et l'accumulateur de fluide (2),
- la pompe à lubrifiant (3) faisant tourner le vilebrequin (11) dans une direction vers l'arrière (B), lorsque la soupape (10) établit une liaison fluidique entre l'accumulateur de fluide (2) dans lequel est stocké du fluide sous pression, et le raccord de pression (3b) de la pompe à lubrifiant (3) et la pompe à lubrifiant (3) tournant dans une direction d'entraînement (D) orientée vers l'arrière.

9. Agencement de fluide pour un démarrage d'un moteur à combustion interne, comprenant :
- un accumulateur de fluide (2),
- une pompe (3) avec un raccord d'aspiration (3a) et un raccord de pression (3b), le raccord de pression étant connecté à l'accumulateur de fluide (2) par le biais d'une conduite fluidique (8),
- une soupape (10) qui est disposée dans la conduite fluidique (8) entre l'accumulateur de fluide (2) et le raccord de pression de la pompe (3), et
- une unité de commande (17) qui est conçue pour commuter la soupape (10),
- l'unité de commande (17) étant conçue, pour démarrer le moteur à combustion interne, pour amener la soupape (10) dans une position dans laquelle l'accumulateur de fluide (2) est connecté au raccord de pression (3b) de la pompe (3), de telle sorte que la pompe (3) soit tournée dans une direction d'entraînement (D) orientée vers l'arrière par le fluide s'écoulant hors de l'accumulateur de fluide (2) et fasse tourner par le biais d'un vilebrequin un piston du moteur à combustion interne dans une position de départ dans la direction vers l'arrière.

10. Procédé pour démarrer un moteur à combustion interne comprenant un vilebrequin (11), au moins un piston (12) disposé dans un cylindre et un circuit de lubrifiant (20) avec une pompe (3) qui est connectée au vilebrequin, comprenant les étapes suivantes :
- rotation de la pompe (3) dans une direction d'entraînement (D) orientée vers l'arrière au moyen d'une pression sortant d'un accumulateur de fluide (2) de telle sorte que le piston (12) comprime de l'air dans le cylindre (13),
- injection de carburant dans l'air comprimé dans le cylindre (13), et
- allumage du mélange carburant-air dans le cylindre (13) afin de démarrer automatiquement le moteur à combustion interne.

11. Procédé selon la revendication 10, **caractérisé en ce que** le vilebrequin (11) est tourné dans la direction d'entraînement (B) orientée vers l'arrière jusqu'à ce que le piston (12) adopte une position à proximité du point mort haut, en particulier adopte une position angulaire comprise entre 5° et 15°, de préférence de 10°.

12. Procédé selon la revendication 10 ou 11, **caractérisé en ce que** le vilebrequin (11) est tourné dans la direction d'entraînement (B) orientée vers l'arrière jusqu'à ce que le piston (12) ait au moins une fois dépassé le point mort haut.
